# EUROPEAN PATENT SPECIFICATION

(11) **EP 1 985 504 B1**
(45) Date of publication and mention of the grant of the patent: **22.06.2011**
(21) Application number: 08154200.3
(22) Date of filing: 08.04.2008
(51) Int. Cl.: B60R 21/0132

(54) **Improved vehicular collision sensing system**
Verbessertes Fahrzeugkollisionserkennungssystem
Système amélioré de détection de collision de véhicules

(30) Priority: 26.04.2007 US 926341 P
(43) Date of publication of application: 29.10.2008
(73) Proprietor: Delphi Technologies, Inc., Troy, Michigan 48007 (US)
(72) Inventor: Simpson, Russell L., Noblesville, IN 46060 (US); Nichols, David , J., Carmel, IN 46032 (US); Little, David R., Kokomo, IN 46902 (US)
(74) Representative: Denton, Michael John

(56) References cited:
- DE-A1- 19 844 149

## Description

### Technical Field

The present invention relates generally to deployable vehicle restraining systems and more particularly to a sensing system enhancement for use with dual stage airbags.

### Background of the Invention

Deployable restraints have been used for many years to mitigate occupant injuries in vehicle crashes. These restraints operate by detecting a collision and inflating one or more air bags that act to prevent the driver and/or passenger from contacting the steering wheel or dashboard. Because of the time required to deploy most restraints, the sensor system must be able to predict the deployment of the restraint well in advance of the time it is actually used by the occupant. Generally, the sooner the sensor system recognizes a collision and deploys the restraint, the lesser the chance of driver and/or passenger injury.

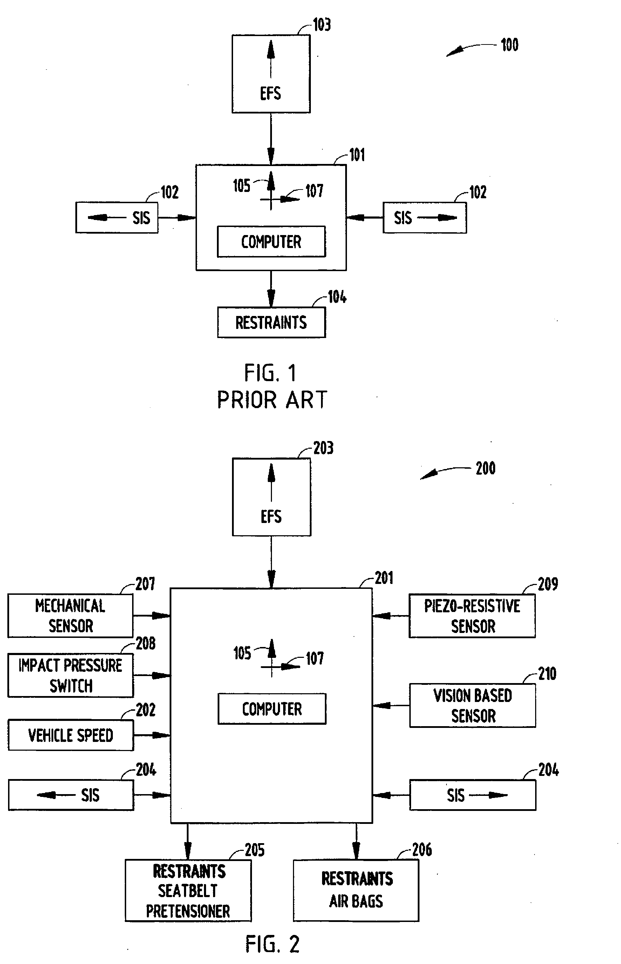

As seen in prior art FIG. 1, a typical restraint system uses computer and algorithm to operate the restraint system 100 that consists of a sensing and diagnostic module (SDM) 101 as well as one or more electronic frontal sensor(s) (EFS) 103, side impact sensors (SIS) 102, and appropriate deployable restraints 104. The SDM 101 is typically located in the passenger compartment and contains a computer/ microprocessor to execute a sensing algorithm along with two accelerometers 105 and 107. The accelerometers 105, 107 are oriented in a manner to measure vehicle longitudinal and lateral decelerations for providing both safety and backup deployment functions. The EFS 103 is located in the forward portion of the vehicle for providing early impact detection in frontal collisions. The SIS 102 is located in the door or side structure of the vehicle to provide early impact detection in side collisions. The SIS 102 and EFS 103 also include an accelerometer and appropriate signal conditioning and communication circuitry (which may include a microprocessor) for transmitting changes in vehicle velocity to the SDM 101.

As known in the art, the algorithm located in the SDM typically measures the change in velocity that occurs as the EFS sensor is decelerated by an impact where forces are applied to the device as a result of the crushing vehicle structure. This accumulated change in velocity represents an estimate of the vehicle's initial contact velocity (Vₒ). The Vₒ estimate from the EFS location occurs much earlier in the crash than the measured final velocity from the SDM in the passenger compartment. Thus, the location of the EFS will affect how quickly a peak velocity is measured. As the mounting location moves rearward from the front of the vehicle, the cumulative time required to make an accurate peak velocity measurement increases.

Also as known in the art, accelerometers are used to estimate Vₒ because they have the added advantage of taking into consideration the mass of the impacted object. The severity of a collision with respect to an occupant is proportional to both the speed at impact (Vₒ) and the mass of the impacted object. Striking a heavy object (such as another vehicle) at a given speed may produce a large vehicle deceleration with consequent risk of injury to vehicle occupants, but striking a light object (such as a traffic barrel) at the same speed would produce an insignificant deceleration with little or no risk to the occupants. Hence, the use of vehicle speed alone is generally insufficient to determine if the impact will produce significant occupant injuries requiring restraint.

It is further known in the art that inflatable restraints may be provided with the capability for multiple levels of restraint force. These multiple levels, or stages, are provided to adapt the restraint to different conditions of accident severity, occupant size, occupant position, restraint configuration, etc. For example, a first stage deployment may only require the vehicle's airbag to be partially filled with gas if the impact is below some threshold Vₒ value, while a second stage deployment may require the airbag to be completely filled at some higher threshold value. Hence, it is important for a sensing system to be able to determine whether an event requires a first stage or a second stage airbag deployment. Whether a first stage or second stage deployment is triggered is typically based on the type of forces involved in a vehicle crash. This will depend on the particular type and speed of the vehicle crash. For example, an offset deformable barrier (ODB) impact may require a lower Vₒ threshold for second stage airbag deployment than a rigid frontal barrier impact. This additional dimension of dual stage airbags can make sensing calibrations difficult. Calibrating a sensing algorithm to properly deploy dual stage airbags for offset deformable barrier (ODB) and angle crashes can result in tradeoffs with the dual stage calibrations for full frontal threshold-airbag-desired crashes. Adjusting second stage thresholds for timely deployments for ODB and arigle-type crashes can often lead to a calibration that is too sensitive for full frontal impacts, where the result is an unwanted second stage deployments for lower vehicle speed full frontal crashes. This invention provides a novel method of addressing these issues. DE-A-19844149 discloses a system in accordance with the preamble of claim 1.

### Summary of the Invention

A crash sensing system for determining a vehicle impact includes an electronic controller for activating impact mitigation equipment during both a first stage event and second stage event. The first stage event partially inflates an air bag and/or activates a seatbelt pretensioner and a second stage event fully inflates an air bag. One or more sensors are used for determining the magnitude of both frontal and side impact forces during the vehicle impact. The controller operates to adjust the sensitivity of the sensors based upon vehicle speed measurements. The electronic controller activates equipment to mitigate injuries in frontal impact and side impact collisions.

These and other features, advantages, and objects of the present invention will be further understood and appreciated by those skilled in the art by reference to the following specification, claims, and appended drawings.

### Brief Description of the Drawings

The present invention will now be described, by way of example, with reference to the accompanying drawings, in which:
FIG. 1 is a prior art block diagram of a sensing and diagnostic module (SDM) used in connection with an electronic frontal sensor (EFS) and side impact sensors (SIS) to control a typical deployable restraint system;
FIG 2 is block diagram illustrating an SDM as used in accordance with an embodiment of the invention;
FIG. 3 is a flowchart diagram illustrating the steps of a method for use in an improved vehicular collision sensing system in accordance with an embodiment of the invention; and
FIG. 4 is a logic diagram describing a method of implementation of the invention.

Skilled artisans will appreciate that elements in the figures are illustrated for simplicity and clarity and have not necessarily been drawn to scale. For example, the dimensions of some of the elements in the figures may be exaggerated relative to other elements to help to improve understanding of embodiments of the present invention.

### Description of the Preferred Embodiment

Before describing in detail embodiments that are in accordance with the present invention, it should be observed that the embodiments reside primarily in combinations of method steps and apparatus components related to an improved vehicular collision sensing system. Accordingly, the apparatus components and method steps have been represented where appropriate by conventional symbols in the drawings, showing only those specific details that are pertinent to understanding the embodiments of the present invention so as not to obscure the disclosure with details that will be readily apparent to those of ordinary skill in the art having the benefit of the description herein.

In this document, relational terms such as first and second, top and bottom, and the like may be used solely to distinguish one entity or action from another entity or action without necessarily requiring or implying any actual such relationship or order between such entities or actions. The terms "comprises," "comprising," or any other variation thereof, are intended to cover a non-exclusive inclusion, such that a process, method, article, or apparatus that comprises a list of elements does not include only those elements but may include other elements not expressly listed or inherent to such process, method, article, or apparatus. An element proceeded by "comprises ... a" does not, without more constraints, preclude the existence of additional identical elements in the process, method, article, or apparatus that comprises the element.

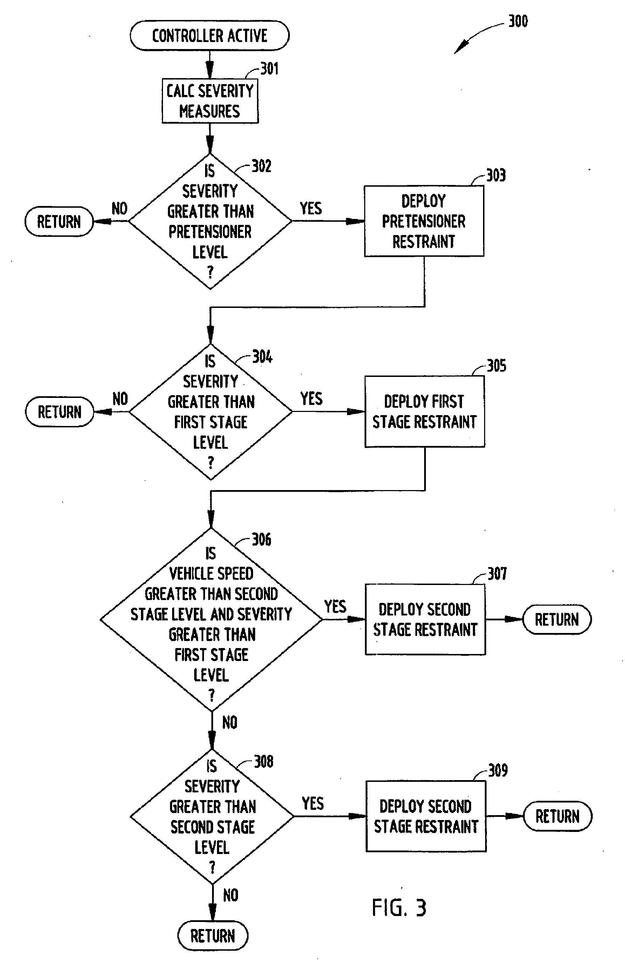

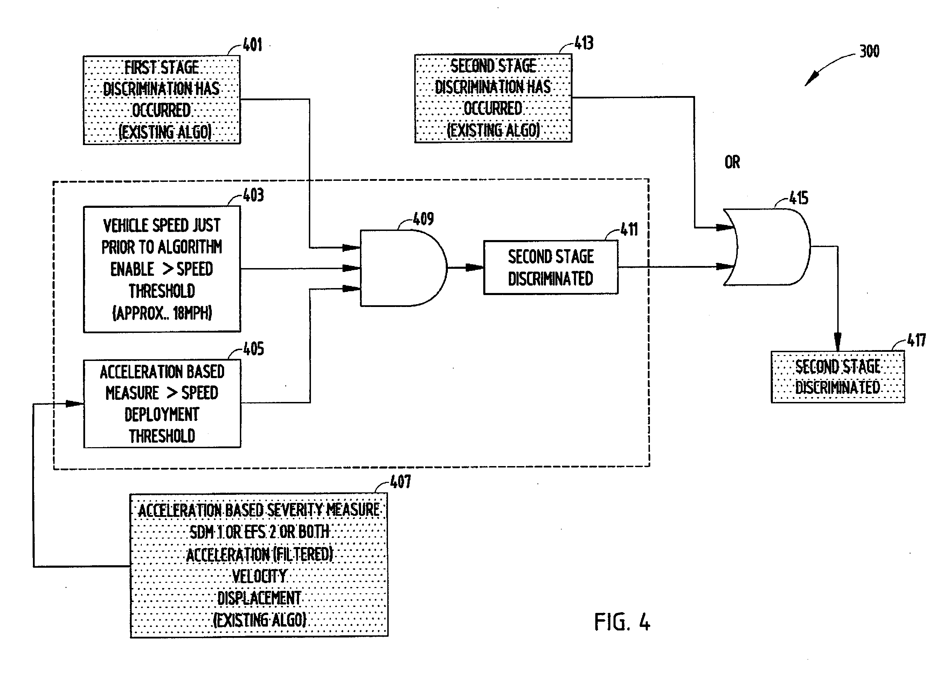

The present invention is an enhancement to the "acceleration based" algorithms and systems used in the prior art to improve vehicular collision sensing systems. As shown in FIG. 2, the invention uses vehicle speed measurements 202 typically available via the vehicle communication local area network (LAN) and/or any other direct digital or analog data source to adjust the sensitivity of the sensing system. This embodiment includes a typical SDM 201 with accelerometers for sensing frontal and side impact collisions and a computer to process acceleration and speed data and activate restraint deployment. The computer within the SDM 201 contains an algorithm to control the functions of the overall system 200, a portion of which algorithm is described in the flowchart FIG. 3 and the logic diagram FIG. 4 and which comprises the essence of the invention. The embodiment also includes satellite sensors 203 and 204 located at the periphery of the vehicle with accelerometers for early crash detection, and one or more restraint systems 205 and 206 to mitigate occupant injuries in crashes. These restraints may provide a single level or stage of restraint or may be capable of providing multiple levels or stages of restraint. The invention is intended to improve the management of these multiple stages by improving the method of progressing from the lowest level of restraint (stage 1) to the highest level of restraint (stage 2...n.) The favored embodiment may also include multiple or alternative sensors to assist or replace the accelerometers in determining if an impact has occurred with an object of sufficiently large mass to render a significant risk of injury to the vehicle occupants. These sensors may include a mechanical sensor 207, such as an arming or safeing sensor which uses vehicle deceleration to move a mass and cause closure of an electrical contact, an impact pressure sensor 208, which uses the pressure caused by the collapse of an interior space to signify impact severity, a piezo-electric or piezo-resistive sensor 209, which measures the deflection of a component of the vehicle such as the bumper to assess impact severity, or a vision based sensor 210, which uses imaging techniques to estimate the mass of an impacting object.

It should be noted that the essence of the invention is based on the proposition that if the accelerometer based crash-sensing system has discriminated a first stage event, it can be assumed that an object of significant mass has been impacted. Vehicle speed can then be used to immediately determine if additional stages should be deployed. This can eliminate the need to wait for deceleration alone to build to a higher Vₒ threshold level appropriate for a second stage deployment. Thus the time required to determine if a second stage deployment is required can be significantly reduced.

FIG. 3 illustrates a flow chart diagram showing the improved vehicular collision sensing system in accordance with an embodiment of the invention. As shown in FIG. 3, a typical sensing algorithm 300 includes the calculation of various severity measures 301 such as filtered accelerations, accumulated velocity, estimated displacement, etc. The algorithm may also include a pretensioner deployment control 302 that uses the calculated severity measures compared to low-level calibration thresholds to deploy seatbelt pretensioners 303. The algorithm will also include comparison of the severity measures with higher-level thresholds 304 to determine the need for a first stage airbag deployment 305. In accordance with the present invention, if the accelerometer based crash sensing system has discriminated a first stage event 305 and if the vehicle speed is greater than a calibratable speed threshold 306, then a second stage airbag is deployed 307. To ensure that a second stage airbag deployment occurs in severe crashes where vehicle speed is low and the speed of impact is caused by motion of the impacted object, a solely acceleration based discrimination 308 is provided to deploy the second stage 309. The acceleration based severity measures can originate from an SDM, an EFS or a relationship of these two measures.

Thus, an embodiment of the invention allows calibration of the second stage severity thresholds for frontal crashes arbitrarily above a typical 16 miles per hour (MPH) first stage severity threshold allowing a lower and more sensitive second stage severity threshold for ODB and angle crashes when vehicle speeds are greater than a typical 18 MPH at the time the algorithm is enabled. Thus, the invention allows faster deployment of second stage airbags for all frontal crashes as well as providing greater flexibility in selecting second stage thresholds for ODB, angle, and other non-rigid barrier impacts.

As shown in FIG. 4, the invention can be implemented by adding logic to an existing sensing algorithm. The new logic provides a logical "AND" function to the first stage discrimination status with a vehicle speed greater than a speed-threshold status and with a second stage severity measure greater than an acceleration-based severity-measure-threshold status to estimate the crash severity and set the second stage airbag discrimination status as appropriate. Thus, the improved method of vehicular collision detection system 400 includes a determination if the first stage discrimination has occurred 401. The vehicle speed just prior to the algorithm enable is compared to a vehicle speed threshold 403 which typically is greater than 18 mph. This signal is combined with the first stage discrimination signal and a vehicle acceleration based measure 407, which is greater than a threshold 405 chosen to compliment the speed-based threshold. The acceleration based measure 307 may be provided by either the SDM or the EFS or both, and may be derived from acceleration, velocity or displacement. If all of these values are present as true at the logical AND 409, then a second stage determination is discriminated 411. The result of the second stage discrimination is presented to a logical OR 415 such that either the final second stage discrimination 417 may occur based upon the existing second stage algorithm 413 or by a determination made through the result 411 reached through the logical AND process 409.

It will be understood by those who practice the invention and those skilled in the art, that various modifications and improvements may be made to the invention according to the present set of claims.

## Claims

1. A crash sensing system for determining a vehicle impact comprising:
at least one electronic controller (201) for activating impact mitigation equipment (205, 206) during both a first stage event (303, 305) and a second stage event (307, 309);
a plurality of sensors (204, 207-210) for determining the magnitude of both frontal and side impact forces during the vehicle impact; and
wherein the at least one controller operates to adjust the sensitivity of the plurality of sensors based upon vehicle speed measurements; **characterized by**
the at least one controller actuating the second stage event after detection of the first stage event followed by vehicle speed being greater than a calibratable speed threshold (306) and an acceleration based severity measure being greater than a second stage severity threshold (306, 308).

2. A crash sensing system as in claim 1, wherein the electronic controller (201) activates equipment to mitigate injuries in frontal impact collisions.

3. A crash sensing system as in claim 1, wherein the electronic controller (201) activates equipment to mitigate injuries in side impact collisions.

4. A crash sensing system as in claim 1, wherein the first stage event (305) partially inflates an air bag device.

5. A crash sensing system as in claim 1, wherein the second stage event (307, 309) fully inflates an air bag device.

6. A crash sensing system as in claim 1, wherein the first stage event (303) activates a seatbelt pretensioner.

7. A crash sensing system as in claim 1, wherein the second stage event (307, 309) partially inflates an air bag device.

8. A crash sensing system as in claim 1, wherein the electronic controller (201) activates a deployable restraint based on activation of a previous stage and vehicle speed exceeding a pre-determined threshold.

9. A crash sensing system for determining a vehicle impact as in claim 1, wherein the acceleration based severity measure can originate from a sensing and diagnostic module (SDM).

10. A crash sensing system for determining a vehicle impact as in claim 1, wherein the acceleration based severity measure can originate from an electronic frontal sensor (EFS).

11. A crash sensing system for determining a vehicle impact as in claim 1, wherein the acceleration based severity measure can originate from a side impact sensor (SIS).

12. A crash sensing system for determining a vehicle impact as in claim 1, wherein the severity measure originating from an electronic frontal sensor (EFS) or a side impact sensor (SIS) is communicated as an acceleration value.

13. A crash sensing system for determining a vehicle impact as in claim 1, wherein the severity measure originating from an electronic frontal sensor (EFS) or a side impact sensor (SIS) is communicated as a discrete exceeded-threshold value.

14. A crash sensing system as in claim 1, wherein the measured vehicle speed is derived from a vehicle serial data bus, a direct digital data connection, an analog speed signal connection or any other source.

## Patentansprüche

1. Unfallerfassungssystem zum Bestimmen eines Fahrzeugaufpralls, das aufweist:
zumindest eine elektronische Steuervorrichtung (201) zum Aktivieren von Aufprallminderungsausrüstung (205, 206) während sowohl eines Ereignisses der ersten Stufe (303, 305) als auch eines Ereignisses der zweiten Stufe (307, 309);
eine Vielzahl von Sensoren (204, 207-210) zum Bestimmen der Stärke von sowohl frontalen als auch seitlichen Aufprallkräften während des Fahrzeugaufpralls; und
wobei die zumindest eine Steuervorrichtung arbeitet, um die Empfindlichkeit der Vielzahl von Sensoren basierend auf Fahrzeuggeschwindigkeitsmessungen anzupassen; **dadurch gekennzeichnet, dass**
die zumindest eine Steuervorrichtung das Ereignis der zweiten Stufe betätigt nach einem Erfassen des Ereignisses der ersten Stufe, gefolgt von einer Fahrzeuggeschwindigkeit höher als eine kalibrierbare Geschwindigkeitsschwelle (306) und einem Beschleunigungs-basierten Schweregrad größer als eine Schwereschwelle einer zweiten Stufe (306, 308).

2. Unfallerfassungssystem gemäß Anspruch 1, wobei die elektronische Steuervorrichtung (201) Ausrüstung aktiviert zum Mindern von Verletzungen bei Frontalaufprallkollisionen.

3. Unfallerfassungssystem gemäß Anspruch 1, wobei die elektronische Steuervorrichtung (201) Ausrüstung aktiviert zum Mindern von Verletzungen bei Seitenaufprallkollisionen.

4. Unfallerfassungssystem gemäß Anspruch 1, wobei das Ereignis der ersten Stufe (305) eine Airbag-Vorrichtung teilweise aufbläst.

5. Unfallerfassungssystem gemäß Anspruch 1, wobei das Ereignis der zweiten Stufe (307, 309) eine Airbag-Vorrichtung vollständig aufbläst.

6. Unfallerfassungssystem gemäß Anspruch 1, wobei das Ereignis der ersten Stufe (303) einen Sicherheitsgurtstraffer aktiviert.

7. Unfallerfassungssystem gemäß Anspruch 1, wobei das Ereignis der zweiten Stufe (307, 309) eine Airbag-Vorrichtung teilweise aufbläst.

8. Unfallerfassungssystem gemäß Anspruch 1, wobei die elektronische Steuervorrichtung (201) eine auslösbare Halteeinrichtung aktiviert basierend auf einer Aktivierung einer vorherigen Stufe und darauf, dass die Fahrzeuggeschwindigkeit eine vorgegebene Schwelle übersteigt.

9. Unfallerfassungssystem zum Bestimmen eines Fahrzeugaufpralls gemäß Anspruch 1, wobei der Beschleunigungs-basierte Schweregrad aus einem Erfassungs- und Diagnose-Modul (SDM - sensing and diagnostic module) stammen kann.

10. Unfallerfassungssystem zum Bestimmen eines Fahrzeugaufpralls gemäß Anspruch 1, wobei der Beschleunigungs-basierte Schweregrad aus einem elektronischen Frontsensor (EFS - electronic frontal sensor) stammen kann.

11. Unfallerfassungssystem zum Bestimmen eines Fahrzeugaufpralls gemäß Anspruch 1, wobei der Beschleunigungs-basierte Schweregrad aus einem Seitenaufprallsensor (SIS - side impact sensor) stammen kann.

12. Unfallerfassungssystem zum Bestimmen eines Fahrzeugaufpralls gemäß Anspruch 1, wobei der Schweregrad, der aus einem elektronischen Frontsensor (EFS) oder einem Seitenaufprallsensor (SIS) stammt, als ein Beschleunigungswert kommuniziert wird.

13. Unfallerfassungssystem zum Bestimmen eines Fahrzeugaufpralls gemäß Anspruch 1, wobei der Schweregrad, der aus einem elektronischen Frontsensor (EFS) oder einem Seitenaufprallsensor (SIS) stammt, als ein diskreter Schwelleübersteigender Wert kommuniziert wird.

14. Unfallerfassungssystem gemäß Anspruch 1, wobei die gemessene Fahrzeuggeschwindigkeit aus einem seriellen Fahrzeug-Datenbus, einer direkten digitalen Datenverbindung, einer analogen Geschwindigkeitssignalverbindung oder einer anderen Quelle abgeleitet ist.

## Revendications

1. Système de détection de collision pour déterminer un impact d'un véhicule, comprenant :
au moins un contrôleur électronique (201) pour activer un équipement de réduction d'impact (205, 206) à la fois pendant un événement de premier stade (303, 305) et pendant un événement de second stade (300, 309) ;
une pluralité de capteurs (204, 207-210) pour déterminer l'amplitude à la fois des forces d'impact frontales et des forces d'impact latérales pendant l'impact du véhicule ; et
dans lequel ledit au moins un contrôleur fonctionne pour ajuster la sensibilité de la pluralité de capteurs en se basant sur des mesures de vitesse du véhicule ;
**caractérisé en ce que**
ledit au moins un contrôleur actionne l'événement de second stade après détection de l'événement de premier stade suivi par le fait que la vitesse du véhicule est supérieure à un seuil de vitesse susceptible d'être calibré (306) et une mesure de gravité basée sur l'accélération, qui est supérieure à un seuil de gravité de second stade (306, 308).

2. Système de détection de collision selon la revendication 1, dans lequel le contrôleur électronique (201) active un équipement pour réduire des blessures dans des collisions par impact frontal.

3. Système de détection de collision selon la revendication 1, dans lequel le contrôleur électronique (201) active un équipement pour réduire des blessures dans des collisions par impact latéral.

4. Système de détection de collision selon la revendication 1, dans lequel l'événement de premier stade (305) gonfle partiellement un dispositif à airbag.

5. Système de détection de collision selon la revendication 1, dans lequel l'événement de second stade (300, 309) gonfle totalement un dispositif à airbag.

6. Système de détection de collision selon la revendication 1, dans lequel l'événement de premier stade (303) active un prétensionneur de ceinture de sécurité.

7. Système de détection de collision selon la revendication 1, dans lequel l'événement de second stade (300, 309) gonfle partiellement un dispositif à airbag.

8. Système de détection de collision selon la revendication 1, dans lequel le contrôleur électronique (201) active un dispositif de retenue déployable en se basant sur l'activation d'un stade précédent et sur le fait que la vitesse du véhicule excède un seuil prédéterminé.

9. Système de détection de collision pour déterminer un impact d'un véhicule, selon la revendication 1, dans lequel la mesure de gravité basée sur l'accélération peut avoir pour origine un module de détection et de diagnostic.

10. Système de détection de collision pour déterminer un impact d'un véhicule, selon la revendication 1, dans lequel la mesure de gravité basée sur l'accélération peut avoir pour origine un capteur électronique frontal.

11. Système de détection de collision pour déterminer un impact d'un véhicule, selon la revendication 1, dans lequel la mesure de gravité basée sur l'accélération peut avoir pour origine un capteur d'impact latéral.

12. Système de détection de collision pour déterminer un impact d'un véhicule selon la revendication 1, dans lequel la mesure de gravité originant d'un capteur électronique frontal ou d'un capteur d'impact latérale est communiquée à titre de valeur d'accélération.

13. Système de détection de collision pour déterminer un impact d'un véhicule selon la revendication 1, dans lequel la mesure de gravité originant d'un capteur électronique frontal ou d'un capteur d'impact latéral est communiquée sous forme d'une valeur discrète de dépassement de seuil.

14. Système de détection de collision selon la revendication 1, dans lequel la vitesse mesurée du véhicule est dérivée d'un bus de données série du véhicule, d'une connexion de données numériques directe, d'une connexion de signal de vitesse analogique, ou d'une quelconque autre source.
